**Europäisches Patentamt**

**European Patent Office**

**Office européen des brevets**

(19)

(11) Veröffentlichungsnummer : **0 328 477 B1**

(12)

# EUROPÄISCHE PATENTSCHRIFT

(45) Veröffentlichungstag der Patentschrift :
30.12.92 Patentblatt 92/53

(51) Int. Cl.⁵ : **B27N 5/00**

(21) Anmeldenummer : **89730018.2**

(22) Anmeldetag : **25.01.89**

(54) **Gitterdämpfung.**

(30) Priorität : **10.02.88 DE 3804416**

(43) Veröffentlichungstag der Anmeldung :
**16.08.89 Patentblatt 89/33**

(45) Bekanntmachung des Hinweises auf die
Patenterteilung :
**30.12.92 Patentblatt 92/53**

(84) Benannte Vertragsstaaten :
**DE ES FR GB IT**

(56) Entgegenhaltungen :
**DE-B- 1 220 122**

(73) Patentinhaber : **LIGNOTOCK GmbH**
**Bahnhofstrasse 13-15**
**W-6443 Sontra 1 (DE)**

(72) Erfinder : **LIGNOTOCK GmbH**
**Bahnhofstrasse 13-15**
**W-6443 Sontra 1 (DE)**

(74) Vertreter : **Pfenning, Meinig & Partner**
**Kurfürstendamm 170**
**W-1000 Berlin 15 (DE)**

## Beschreibung

Die Erfindung bezieht sich auf ein Verfahren entsprechend dem Oberbegriff des Anspruchs 1.

Bei der Herstellung räumlich verformter Preßteile aus Mattenzuschnitten von vorzugsweise Zellulose- und/oder Lignozellulosefasern mit einem geeigneten Bindemittelzusatz, etwa für die Innenverkleidung von Kraftfahrzeugen dienenden Formteilen, muß der erforderliche Verfahrensablauf in mehreren Schritten erfolgen. Die Fasermatten sind kaum in der Lage, ausreichende Zug- und Schubkräfte, wie sie bei der einstufigen Verformung auftreten, aufzunehmen und die Holzfaser ist im trockenen Zustand zu spröde, um sich in einer geeigneten Heißpreßform ohne Vordämpfung überhaupt zu Formteilen verpressen zu lassen. Fasermatten aus dem hier interessierenden Material werden daher zwar in ihrem trockenen lagerungsfähigen Zustand in die für die jeweiligen Formteile beabsichtigte Form entsprechenden Zuschnitte geschnitten bzw. diese aus den Fasermatten herausgestanzt, diese Zuschnitte müssen vor dem Vorpreßvorgang oder dem Fertigpressen dann aber zunächst einer heißdampfbehandlung unterworfen werden. Hierdurch erweichen die Fasern und es kommt zu einer sogenannten Plastifizierung des Mattenzuschnittes, was mit einer nicht unerheblichen Volumenvergrößerung, insbesondere einer Vergrößerung der Dicke des Mattenzuschnittes um ca. das Drei- bis Fünffache der Ausgangsdicke verbunden ist. Nur in diesem Zustand ist die räumliche Verformung der von Haus aus von der Kräfteaufnahme her praktisch unverformbaren Matte unter Beachtung weiter hier nicht interessierender Verfahrensmerkmale möglich.

Die plastifizierte und damit stark volumenvergrößerte Matte bzw. der entsprechende Mattenzuschnitt hat jedoch den erheblichen Nachteil, daß die schon beim Ausgangsprodukt für ihre Handhabung nicht gerade vorteilhafte geringe Eigenfestigkeit noch weiter herabgesetzt ist, was auch die Schub- und Zugkraftverteilung bei der nachfolgenden Verformung verschlechtert.

Hier setzt die vorliegende Erfindung ein, der die Aufgabe zugrundeliegt, ein Verfahren der gattungsgemäßen Art dahingehend zu verbessern, unter Beibehaltung der mit der Aufdämpfung bzw. Plastifizierung des Mattenzuschnittes verbundenen Vorteile für den nachfolgende Preßvorgang die Eigenfestigkeit des Mattenzuschnittes wenigstens in Teilbereichen derart zu erhöhen, daß eine verbesserte Schub- und Zugkraftverteilung während der Verformung erhalten wird.

Die Lösung dieser Aufgabe bringt das im Kennzeichen des Anspruchs 1 angegebene Verfahren.

Vorteilhafte Weiterbildungen und Ausgestaltungen dieses Verfahrens ergeben sich aus den Unteransprüchen.

Dadurch, daß während des oder nach dem Plastifizieren des Mattenzuschnittes die Matte linien-, punkt-, rasterförmig oder in einer anderen geeigneten Struktur an ihrer Dickenvergrößerung wenigstens teilweise gehindert wird, bleibt die ursprüngliche Festigkeit des Fasermaterials entlang und in diesen vorgegebenen Strukturen näherungsweise erhalten, während ansonsten über den gesamten Mattenzuschnitt die gewünschte Wirkung der Dampfbehandlung ungehindert durchgeführt und damit eintreten kann.

Wenn beispielweise die Dicke D des ursprünglichen unbehandelten Mattenzuschnittes während des Plastifizierungsvorganges verdreifacht wird, also auf 3 D sich vergrößert, dann kann die rückhaltende Gitterstruktur bewirken, daß sich entlang ihrer Strukturlinien oder dergleichen die Matten nur auf 1,5 D ausdehnen können. Entlang der Strukturlinien wird damit praktisch die ursprüngliche Festigkeit des Mattenzuschnittes erhalten, während sich das Mattenmaterial selbst, beispielsweise bei einem siebartigem Gitter, zwischen den Gitterstrukturen kissenartig auf die vorgesehene Dicke erweitern und damit die Vorteil der Plastifizierung annehmen kann. Hierfür ist es vorteilhaft und wichtig, die Differenz des Aufquellens des Mattenmaterials zwischen dem von dem rasterförmigen Verdichtungsmuster vorgegebenen Bereichen, Linien oder Punkten und den sich ergebenden Aufdämpfungsmaxima in geeignete Abstimmung zu bringen zu der vorzugebenden Rasterungsdimensionierung der Gitterstruktur. Beispielsweise könnte der Maschenabstand bei einer Kreuzgitterrasterung 5 bis 10 D betragen, wenn D wiederum die Dicke der aufgedämpften Matte ist.

Es kann auch vorteilhaft sein, das rasterförmige Verdichtungsmuster während des Aufdämpfens des Mattenzuschnittes diesem nicht gleichmäßig über seine gesamte Oberfläche oder über beide seiner Oberflächen aufzuerlegen, sondern je nach Verwendungszweck des hieraus herzustellenden Formteiles dem Mattenzuschnitt nur bereichsweise ein solches Verdichtungsmuster aufzuprägen.

In einer weiteren vorteilhaften Ausgestaltung der Verfahrensweise kann die Maschenweite des einzuprägenden Verdichtungsmusters für unterschiedliche Bereiche des Mattenzuschnittes unterschiedlich gewählt werden. Auch kann es vorteilhaft sein, die "Eintauchtiefe" des Verdichtungsgitters bereichsabhängig über den Mattenzuschnitt zu variieren, also beispielsweise entlang der Randbereich auf 1,5 D einzustellen und in mittleren Bereichen auf 2,5 D.

Die Dickenvergrößerung der Mattenzuschnitte linien-, punkt- oder gitterförmig zurückhaltende Hilfsmittel können beispielsweise siebartige Drahtstrukturen, hinreichende Eigensteifigkeit sowie Gitterroste aus Metallen sein, die sich in diesem Zusammenhang vorteilhaft verwenden lassen.

Wird das Verdichtungsmuster nach dem eigentlichen Dämpfen eingeprägt, so kann es besonders vorteilhaft sein, gekühlte raster- oder linienförmige Verdichtungsgitter anzuwenden. In diesem Fall tritt im Bereich des Verdichtungsmusters eine zusätzliche Verfestigung thermoplastisch wirkender Bindemittel in der Matte ein, die die Eigenfestigkeit des Mattenzuschnittes zusätzlich verbessert. Ein weiterer Vorteil nachträglich eingepreßter Verdichtungsmuster ist es, daß der Fasermattenzuschnitt in den Verdichtungsmustern höher verdichtet werden kann als im Ausgangszustand.

Die beiliegenden Zeichnungen zeigen eine schematisierte, beispielsweise Ausführungsform einer Vorrichtung, mittels der sich das erfindungsgemäße Verfahren durchführen läßt. Es bedeuten:

Fig. 1 einen stark vereinfacht wiedergegebenen Ausschnitt einer Vorrichtung, der den Beginn des Dämpfens des Mattenzuschnittes andeutet,

Fig. 2 den gleichen Ausschnitt am Ende des Dämpfvorganges, und

Fig. 3 den Zustand des erfindungsgemäß gedämpften Mattenzuschnittes anhand einer vereinfachten perspektivischen Darstellung eines Ausschnittes aus dem Werkstoff.

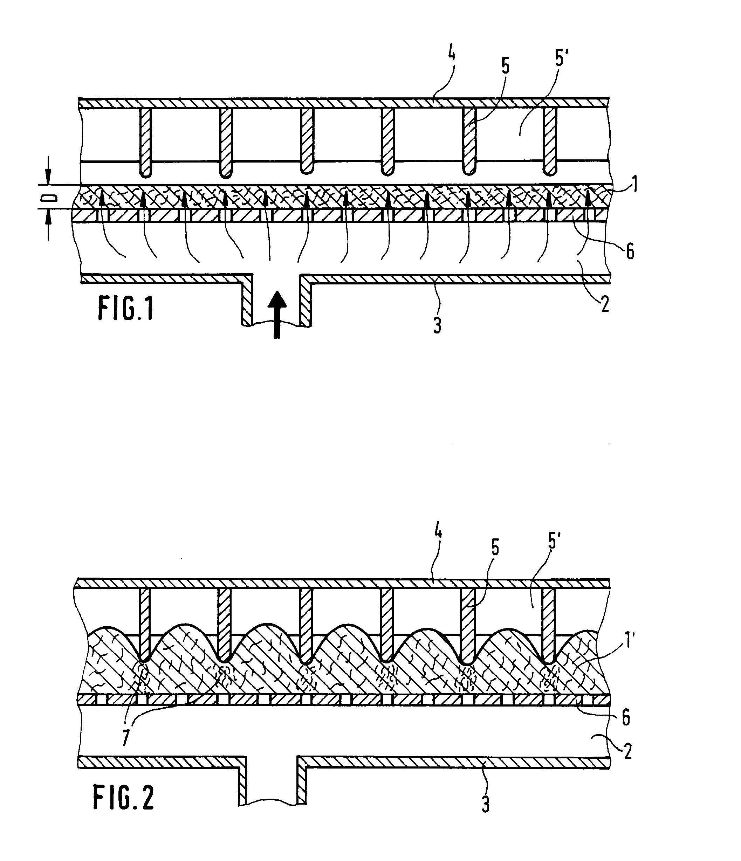

Gemäß Fig. 1 besitzt der ungedämpfte Mattenzuschnitt 1 in seinem Rohzustand zunächst die Dicke D. Der untere Teil der Dämpfvorrichtung wird aus dem schematisch dargestellten Unterkasten 3 und dem Lochboden 6 gebildet. Beide Bauelemente umschließen den Dampfraum 2, in den der Dampf in Pfeilrichtung eingeleitet wird. Der Oberkasten der Dämpfvorrichtung, der zum Einlegen des Mattenzuschnittes 1 geöffnet werden kann, wird beispielsweise aus einem Blechkasten 4 gebildet, an dem ein gitterförmiges Stegraster 5 und 5' befestigt ist. Die geschnitten dargestellten Rasterstege 5 besitzen dabei eine größere Höhe als die Querstege 5', so daß die Stege 5 Zonen höherer Verdichtung bilden, während die Querstege 5' Verdichtungslinien geringerer Verdichtung vorgeben. Dem Fasermattenzuschnitt werden auf diese Weise anisotrope Verformungseigenschaften verliehen, wodurch eine Anpassung auch an stark unsymmetrische Formgebungen möglich wird. Aus dem Dampfraum 2 tritt der Dampf in Richtung der kleinen Pfeile in den Mattenzuschnitt ein und plastifiziert ihn. Seine Dicke wird dabei erheblich vergrößert.

Fig. 2 zeigt in der gleichen ausschnittsweisen Darstellung und mit gleicher Benennung der Bauteile den Endzustand des Plastifizierens durch Dampfeinwirkung. Aus dem Mattenzuschnitt 1 konstanter Dicke hat sich die Zuschnittsform 1' gebildet, die unter den Rasterstegen 5 nunmehr Zonen 7 aufweist, in denen der gedämpfte Mattenzuschnitt höher verdichtet ist und daher höhere Festigkeit besitzt. In beiden Figuren wird dieses Verdichtungsmuster während des Dämpfens aufgebracht.

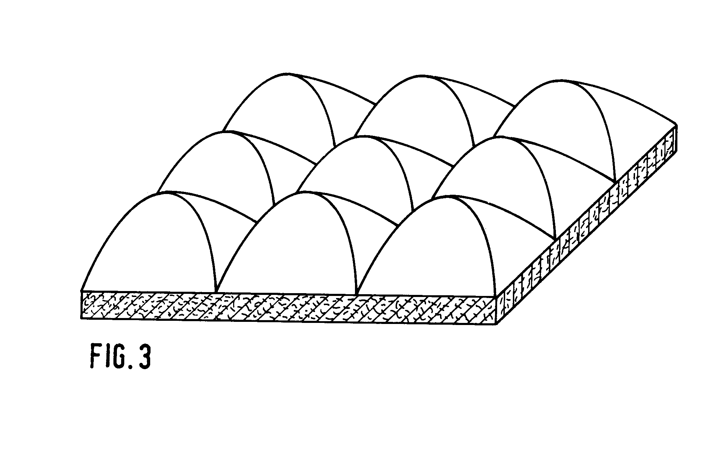

Fig. 3 verdeutlicht in perspektivischer Darstellung die "Kissenstruktur" des Mattenzuschnittes nach dem Dämpfen, ebenfalls in der Darstellung eines Ausschnittes.

Vor allem aus der Fig. 3 ist ersichtlich, daß die höher verdichteten Zonen des Mattenzuschnittes nach dem Dämpfen eine netzförmige Eigenverstärkung des gedämpften Mattenzuschnittes bewirken. Vor allem die erhöhten Zugfestigkeiten des Eigenverstärkungsnetzes begünstigen das störungsfreie Nachziehen von Faserwerkstoff während der Verformung. Da das Eigenverstärkungsgitter die Möglichkeit der Maschenverformung hat, wird dabei das Anpassungsvermögen und somit die Nachgiebigkeit des gedämpften Mattenzuschnittes nicht beeinträchtigt.

## Patentansprüche

1. Verfahren zur Herstellung räumlich verformter Preßteile aus ebenen Zuschnitten von bindemittelhaltigen Fasermatten, die vorzugsweise Zellulose- und/oder Lignozellulosefasern enthalten, bei dem das zunächst schüttfähige lose Fasermaterial in Mattenform gebracht und zu einem Wirrfaservlies verdichtet wird, aus dem die gewünschten Zuschnitte ausgestanzt oder anderweitig abgetrennt werden, nachfolgend diese Zuschnitte mittels Dampfbehandlung erweicht bzw. für die Verformung durch eine anderweitige thermische Behandlung ausreichend plastifiziert werden, um in diesem Zustand schließlich dem das Fasermaterial verdichtenden und verformenden Preßvorgang unterworfen zu werden, **dadurch gekennzeichnet,** daß während oder nach der Dampfbehandlung bzw. der anderweitigen thermischen Behandlung der Mattenzuschnitt wenigstens einseitig von einem linien- oder rasterförmigen Rückhaltegitter oder einem Preßgitter so beaufschlagt wird, daß in Übereinstimmung mit der Gitterstruktur - die mit dem Aufdämpfen verbundene Dickenvergrößerung wenigstens teilweise zurückhaltend -ein entsprechendes Verdichtungsmuster in den aufgedämpften Mattenzuschnitt eingeprägt wird.

2. Verfahren nach Anspruch 1, dadurch gekennzeichnet, daß das linien- oder rasterförmige Verdichtungsmuster dem Fasermattenzuschnitt entlang bzw. über die eine und/oder beide Oberflächen des Mattenzuschnittes nur bereichsweise aufgeprägt wird.

3. Verfahren nach Anspruch 1 oder 2, dadurch gekennzeichnet, daß das raster- oder linienförmige Verdichtungsmuster bereichsweise mit unterschiedlicher Mustergeometrie und/oder unterschiedlichem Verdichtungsgrad eingeprägt wird.

4. Verfahren nach Anspruch 1 bis 3, dadurch gekennzeichnet, daß ein gekühltes Rückhalte- bzw.

Verdichtungsgitter verwendet wird.

**Claims**

1. Process for the manufacture of spatially shaped pressed parts of plane fibre-matting cut-outs, which contain bonding agents and preferably cellulose and/or lignocellulose fibres, in which an initially flowing loose fibre material is transformed into a matted structure and compressed to a random fibre structure, from which the required cut-outs are punched out or separated by a different method and subsequently softened by way of steam treatment or sufficiently plasticized for shaping by another type of thermal treatment, in order to be finally subjected in this state to a pressing process which compresses and deforms the fibre material, **characterised in that**, during or after steam treatment or another type of thermal treatment, the matting cut-out is at least on one side loaded by a line- or raster-shaped retaining grid or pressure grid, that a respective compression pattern is stamped into the steamed-on matting cut-out so as to correspond with the grid structure whilst at least partially holding. back an increase in thickness due to steaming-on.

2. Process according to claim 1, **characterised in that** the line- or raster-shaped compression pattern is only regionally stamped onto the fibre-matting cut-out along or over the one and/or both surfaces of the matting cut-out.

3. Process according to claim 1 or 2, **characterised in that** the raster- or line-shaped compression pattern is regionally stamped thereon with different pattern geometry and/or different degrees of compression.

4. Process according to claim 1 to 3, **characterised in that** a cooled retaining or compression grid is used.

**Revendications**

1. Procédé pour fabriquer des articles moulés à déformations en relief à partir de découpes planes de nappes de fibres contenant des liants, et de préférence des fibres de cellulose et/ou de lignocellulose, dans lequel le matériau fibreux, d'abord lâche et souple, est mis sous forme d'une nappe, puis est comprime pour former un coussin de fibres emmêlées, à partir duquel les découpes souhaitées sont découpées ou séparées autrement, puis ces découpes, à l'aide d'un traitement à la vapeur, sont ramollies ou, grâce à un traitement thermique différent, suffisamment plastifiées pour subir une déformation, de façon à être dans cet état finalement soumis à l'opération de compression, qui assure un compactage et une déformation du matériau fibreux, caractérisé en ce que pendant ou après le traitement à la vapeur ou autre traitement thermique, la découpe constituée de la nappe est, au moins sur un côte, sollicitée par une grille de retenue linéaire ou tramée, ou encore une grille de compression, de façon qu'en conformité avec la structure de la grille, - et en conservant, au moins partiellement, l'augmentation d'épaisseur liée au traitement à la vapeur -, un dessin de compactage correspondant soit incrusté dans la découpe de la nappe ayant subi le traitement à la vapeur.

2. Procédé selon la revendication 1, caractérisé en ce que le modèle de compactage linéaire ou tramé n'est incrusté que par zones le long de la découpe de la nappe de fibres, ou encore sur l'une et/ou les deux surfaces de la découpe de la nappe.

3. Procédé selon la revendication 1 ou 2, caractérisé en ce que le modèle de compactage linéaire ou tramé est incrusté par zones, avec des différences au niveau de la géométrie du modèle et/ou du degré de compactage.

4. Procédé selon l'une quelconque des revendications 1 à 3, caractérisé en ce qu'on utilise une grille refroidie de retenue ou de compactage.

FIG.1

FIG.2

FIG.3